# EUROPÄISCHE PATENTANMELDUNG

(11) **EP 2 058 606 A1**
(43) Veröffentlichungstag der Anmeldung: **13.05.2009**
(21) Anmeldenummer: 08019095.2
(22) Anmeldetag: 31.10.2008
(51) Int. Cl.: F24J 2/52

(54) **Schiene zur Aufnahme und Befestigung eines solartechnischen Kollektors**

(30) Priorität: 09.11.2007 DE 102007053377
(71) Anmelder: GREENoneTEC, 9300 St. Veit/Glan (AT)
(72) Erfinder: Obermann, Wolfgang, 9061 Wölfnitz (AT); Koschier, Günter, 9314 Launsdorf (AT); Ogris, Adolf, 9020 Klagenfurt (AT); Hochreiter, Erwin, 9020 Klagenfurt (AT)
(74) Vertreter: Becker, Thomas

(57) **Zusammenfassung**

Schiene (30) zur Aufnahme und Befestigung eines solartechnischen Kollektors (40), wobei die Schiene (30) aus einem Profilkörper besteht mit zwei zueinander im Abstand verlaufenden, weitestgehend planparallelen Seitenflächen (30o,30u) die außenseitig von zwei entgegengesetzt gekrümmten Kreisringabschnitten (30k) verbunden sind, und wobei mindestens eine der Seitenflächen (30o,30u) oder Kreisringabschnitte (30k) außenseitig mindestens eine Anschlagfläche (30l,30s) zur Festlegung der Schiene (30) in einem korrespondierenden Aufnahmeprofil (20) und/oder zur Befestigung eines Bügels aufweist.

## Beschreibung

Gegenstand der Erfindung ist eine Schiene zur Aufnahme und Befestigung eines solartechnischen Kollektors.

Der Gegenstand der Erfindung kann Bestandteil eines komplexen Installations- und Befestigungssystems für solartechnische Kollektoren (insbesondere Warmwasser- und Photovoltaik-Kollektoren) sein, die beispielsweise auf einem Dach, in einem Dach, auf oder in einer Gebäudefassade installiert werden. Ein mögliches Befestigungssystem, in das der Gegenstand der Erfindung integriert werden kann, wird in der Figurenbeschreibung näher erläutert.

Die genannten Kollektoren weisen häufig ein flaches quaderförmiges Gehäuse mit Abmessungen (Breite, Länge, Höhe) von ca. 100 x 200 x 10cm auf. Sie sind als sogenannte Rahmenkollektoren oder Wannenkollektoren bekannt.

Bisherige Befestigungssysteme sind weitestgehend starr und können die lokalen konstruktiven Vorgaben nicht berücksichtigen. Im Ergebnis werden Kollektoren häufig schief und optisch unzureichend montiert. Ein weiterer Nachteil ist, dass bekannte Befestigungsmittel nur mittels Werkzeug installiert werden können. Für die Monteure bedeutet dies zusätzliche Schwierigkeiten, insbesondere bei der Dach- und Fassadenmontage.

Aufgabe der Erfindung ist es, eine konstruktiv einfache Schiene für ein Kollektor-Befestigungssystem anzugeben, die möglichst ohne Werkzeug montiert und vor Ort in die gewünschte Montageposition gebracht werden kann.

Im Stand der Technik wurden bereits Schienen zur Auflage und Befestigung von Kollektoren eingesetzt. Diese Schienen wurden jedoch über starre Winkel befestigt, wobei zusätzlich Montagewerkzeug benutzt werden musste.

Die Erfindung sieht dem gegenüber eine werkzeugfrei montierbare Schiene vor, die auf Grund ihrer spezifischen Geometrie in ein korrespondierendes Aufnahmeprofil eingelegt und durch Drehen der Schiene in diesem Aufnahmeprofil fixiert werden kann. Im Wesentlichen analog können an der Schiene Bügel befestigt werden, mit denen ein Kollektor gehalten wird.

In ihrer allgemeinsten Ausführungsform ist die Schiene durch folgende Merkmale gekennzeichnet:
- Die Schiene besteht aus einem Profilkörper mit zwei zueinander im Abstand verlaufenden, weitestgehend planparallelen Seitenflächen, die außenseitig von zwei entgegengesetzt gekrümmten Kreisringabschnitten verbunden sind, wobei
- mindestens eine der Seitenflächen oder Kreisringabschnitte außenseitig mindestens eine Anschlagfläche zur Festlegung der Schiene in einem korrespondierenden Aufnahmeprofil und/oder zur Befestigung eines Bügels aufweist.

Im Schnitt ergibt sich daraus ein Profil mit zwei gegenläufig gekrümmten Seitenflächen, die zur formschlüssigen Montage in dem genannten Aufnahmeprofil dienen. Dabei ist der Abstand der beiden weitestgehend planparallelen Seitenflächen geringer als der Abstand der Kreisringabschnitte. Damit ergibt sich die Möglichkeit, die Schiene zur Montage mit ihrer Schmalseite in das Aufnahmeprofil einzulegen und dort zu drehen, wobei sich die Kreisringabschnitte formschlüssig gegen die korrespondierenden Innenflächen des Aufnahmeprofils legen. Die mindestens eine Anschlagfläche ist so angeordnet, dass bei Erreichen eines Gegenanschlags eine exakte Positionierung der Schiene im Aufnahmeprofil gewährleistet ist. Die Anschlagfläche kann über benachbarte Flächenabschnitte nach außen vorstehen oder ein Flächenabschnitt sein, der gegen einen Anschlag im Aufnahmeprofil anschlägt. Die Schiene liegt dann beispielsweise so im Aufnahmeprofil, dass ein Kollektor oder ein Bügel zur Halterung des Kollektors montiert werden kann.

Dabei kann die Anschlagsfläche im Übergangsbereich von der in der Montageposition der Schiene obere Seitenfläche zu einem anschließenden Kreisringabschnitt angeordnet sein. Das bedeutet, dass beim Eindrehen der Schiene in das Aufnahmeprofil die Anschlagfläche gegen einen oberen Rand des Aufnahmeprofils stößt. Der obere Rand des Aufnahmeprofils kann so gestaltet sein, dass sich bei montierter Schiene eine fluchtende Ausrichtung mit der oberen Seitenfläche (Stirnfläche) der Schiene ergibt. Schiene und Aufnahmeprofil können bei Bedarf gegeneinander zusätzlich durch eine Schraubenverbindung gesichert werden. Dazu kann die Schiene mit entsprechenden Aufnahmeöffnungen vorkonfektioniert sein.

Die gegenüberliegende, in der Montageposition untere Seitenfläche muss nicht unbedingt eben (plan) sein, wenngleich dies schon aus herstellungstechnischen Gründen vorteilhaft ist.

In jedem Fall muss die Breite der Schiene so sein, dass sie zur Montage in das Aufnahmeprofil eingeführt werden kann, welches vorzugsweise rinnenartig gestaltet ist und dabei einen Kreisringabschnitt von über 180° definiert, so dass sich der gewünschte Formschluss bei gleichzeitig sicherer Fixierung der Schiene im Profil ergibt.

In der nachfolgenden Figurenbeschreibung wird dies im Einzelnen dargestellt.

Alternativ und/oder kumulativ kann eine Anschlagsfläche auf einer Außenfläche mindestens eines Kreisringabschnitts angeordnet sein. Analog wie vorstehend beschrieben ergibt sich bei der Montage der Schiene im Aufnahmeprofil die exakte Positionierung beim Auflaufen der Anschlagfläche gegen eine korrespondierende Stufe auf der Innenseite des Aufnahmeprofils.

Dabei kann je eine Anschlagfläche auf jedem Kreisringabschnitt angeordnet werden, wobei die Anschlagflächen so angeordnet sind, dass sie beim Einlegen der Schiene in das Aufnahmeprofil gleichzeitig gegen korrespondierende stufenförmige Anschlagflächen des Aufnahmeprofils anschlagen.

Die Anschlagfläche kann über benachbarte Flächenabschnitte vorstehen oder gegenüber diesen zurückspringen. Um den gewünschten Kraft-/Formschluss zu erzielen, ist das Aufnahmeprofil korrespondierend (ähnlich einem Nut-/ Federsystem) gestaltet.

Nach einer Ausführungsform ist vorgesehen, die Schiene mit einer in Axialrichtung der Schiene verlaufenden Leiste auszubilden, die von der oberen Seitenfläche (Stirnfläche) der Schiene nach außen absteht. Diese Leiste dient zur Positionierung und Fixierung eines Kollektors, der auf der Schiene aufgelegt wird. Auch dies wird in der nachfolgenden Figurenbeschreibung näher erläutert.

Dabei ist es vorteilhaft, wenn die Leiste mittig von der oberen Seitenfläche absteht und/oder einen rechteckigen Querschnitt besitzt. Dies ermöglicht eine flächige Anlage und gegebenenfalls formschlüssige Verbindungen mit zugehörigen Rastelementen im Bodenbereich des Kollektors.

Um mehrere Schienen miteinander in Axialrichtung verbinden zu können ist vorgesehen, in einem von den Seitenflächen und den Kreisringabschnitten definierten Raum ein axial angeordnetes Rohrprofil anzuordnen. Ein entsprechender rohrförmiger Adapter kann dann beispielsweise jeweils hälftig in die Rohrprofile benachbarter Schienen eingesteckt werden und diese verbinden. Dabei kann der Adapter, beispielsweise mittig, eine radial angeordnete Anschlagfläche aufweisen.

Analog zur Verbindung Schiene/Aufnahmeprofil kann ein Bügel zur Befestigung eines Kollektors auf der Schiene befestigt werden. Der Bügel kann seitlich auf die montierte Schiene aufgesetzt werden (wobei sich der Bügel gegebenenfalls aufweitet). Anschließend wird der Bügel um ca. 90° gedreht, bis die Anschläge von Schiene und Bügel zusammentreffen und der Bügel in der gewünschten Position auf der Schiene befestigt ist.

Die Schiene lässt sich aus Kunststoff oder Metall herstellen, beispielsweise als Strangpressteil. Sie kann ein Hohlprofil sein.

Zu ihrer Montage ist kein Werkzeug notwendig. Sie lässt sich innerhalb des Aufnahmeprofils auch nach der Montage axial verschieben, sobald dies gewünscht wird. Dies kann beispielsweise dann notwendig sein, wenn der Adapter zur Verbindung benachbarter Schienen zufällig im Bereich des Aufnahmeprofils liegen würde.

Weitere Merkmale der Erfindung ergeben sich aus den Merkmalen der Unteransprüche sowie den sonstigen Anmeldungsunterlagen.

Der Gegenstand der Erfindung kann als Bestandteil eines Befestigungssystems für solartechnische Kollektoren verwendet werden, das folgende Komponenten umfasst, wobei Komponenten alleine oder in Kombination mit anderen Komponenten innerhalb eines Befestigungssystems verwendet werden können:
- Mehrere Klammern, wobei jede Klammer zwei Funktionsabschnitte aufweist:

- Einen ersten Abschnitt, mit dem die Klammer an einem feststehenden Körper, wie einer Dachschalung, befestigbar ist,
- einen zweiten Abschnitt zur Aufnahme, Führung und Befestigung einer zugehörigen Schiene, wobei der zweite Abschnitt auf einem Dachelement wie einer Dachpfanne aufliegen kann,
- entsprechend ihrer Funktion können erster und zweiter Abschnitt im Abstand zueinander, beispielsweise an gegenüberliegenden Endabschnitten einer Klammer angeordnet sein,
- mehrere Schienen, die an den Klammern befestigt werden können, und auf denen die Kollektoren unmittelbar oder mittelbar aufgelegt und abgestützt werden,
- mehrere Bügel, wobei jeder Bügel zwei Funktionsabschnitte aufweist:

- Einen ersten Abschnitt, der an einer zugehörigen Schiene befestigt wird,
- einen zweiten Abschnitt, mit dem der Bügel einen korrespondierenden Kollektor fixiert,
- entsprechend ihrer Funktion können erster und zweiter Abschnitt des Bügels im Abstand zueinander, beispielsweise an gegenüberliegenden Endabschnitten des Bügels angeordnet sein.

Der Aufbau und die Zuordnung der einzelnen Komponenten wird nachstehend am Beispiel eines flachen quaderförmigen Warmwasser-Solarkollektors beschrieben und dargestellt, der auf einer Dachfläche (mit Tonziegeln belegt) mit 45°Neigung montiert werden soll. Dabei werden auch mögliche alternative Ausführungsformen genannt, ohne den Erfindungsgedanken und das Anwendungsgebiet insoweit zu beschränken. Dies gilt für die Materialauswahl ebenso wie für Dimensionierungen.

### In den schematischen und nicht maßstabsgerechten Figuren zeigen:

- Figur 1:: Eine Seitenansicht einer Klammer vor dem Zusammenbau.
- Figur 2:: Eine Seitenansicht der Klammer mit eingelegter Schiene nach dem Zusammenbau,
- Figur 3:: Eine Seitenansicht der ersten Ausführungsform einer Klammer im Bereich der Schiene in einer Montageposition,
- Figur 4:: Eine Seitenansicht analog Figur 3 für eine zweite Ausführungsform einer Klammer und Schiene,
- Figur 5:: Eine perspektivische Ansicht eines auf der Schiene aufgesetzten Bügels und dessen Verbindung mit einem Kollektor,
- Figur 6:: Eine Seitenansicht der Bauteilgruppe nach Figur 5,
- Figur 7:: Eine vergrößerte Ansicht eines Verbindungselements zwischen zwei axial aneinander anschließenden Schienen,
- Figur 8:: Eine perspektivische Ansicht einer zweiten Ausführungsform eines Bügels mit zugehörigem Kollektor,
- Figur 9:: Eine Seitenansicht der Bauteilgruppe nach Figur 8,
- Figur 10:: Eine vergrößerte Ansicht des Verbindungsbereichs zwischen Bügel und Schiene gemäß Figuren 8,9,
- Figur 11:: Einen Schnitt durch einen Randabschnitt eines Kollektors,
- Figur 12:: Eine perspektivische Ansicht eines Befestigungsbügels (dritte Ausführungsform).

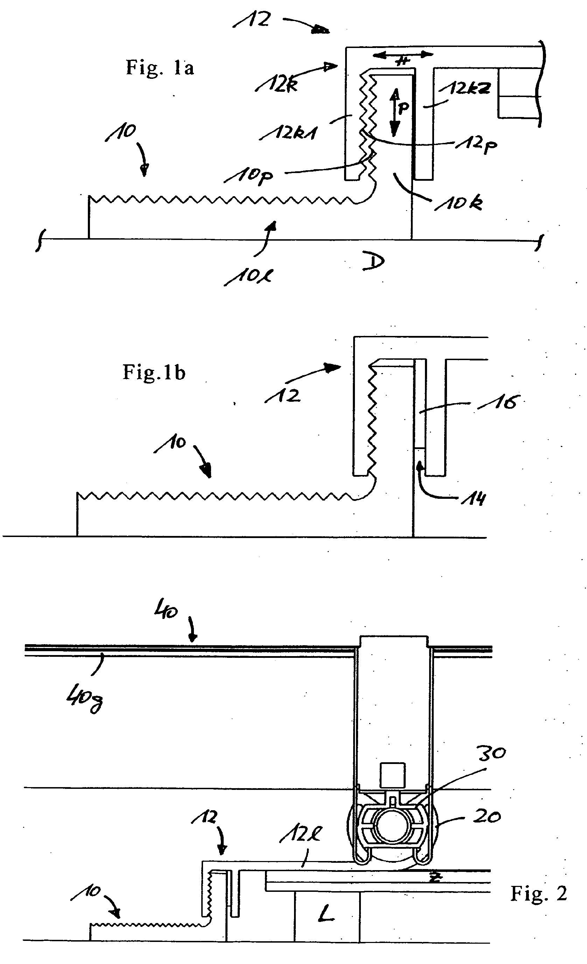

Fig. 1 zeigt eine Klammer mit zwei Klammerteilen: Ein L-förmiger Winkel 10 (erster Klammerteil) ist mit seinem langen Schenkel 101 auf einer Dachschalung D befestigt, während sein kurzer Schenkel 10k senkrecht von der Dachschalung D absteht. Auf seiner Innenseite (in der Figur die linke Seite) weist der kurze Schenkel 10k eine Profilierung 10p auf, die in der Seitenansicht sägezahnartig ist. Die ineinander übergehenden Berge und Täler der Profilierung 10p verlaufen parallel zueinander und parallel zur Dachschalung D.

Der zweite Klammerteil besteht ebenfalls aus einem L-förmigen Winkel 12, wobei der kürzere Schenkel 12k aus zwei parallel im Abstand zueinander angeordneten Schenkelarmen 12k1 und 12k2 besteht. Der Abstand der Schenkelarme 12k1 und 12k2 ist so groß, dass der Schenkel 10k des Winkels 10 dazwischen in Pfeilrichtung P eingeschoben werden kann, wie in der Figur 1 dargestellt.

Der in der Figur linke Schenkelarm 12k1 weist auf seiner dem Schenkelarm 12k2 zugewandten Seite eine Profilierung 12p korrespondierend zur Profilierung 10p auf, so dass beide formschlüssig ineinander greifen und die Winkel 10,12 exakt positionieren, wenn die Winkel 10,12 in Pfeilrichtung H gegeneinander verschoben werden, wie in den Figuren 1b und 2 dargestellt. Dazu wird weiters der verbleibende Raum 14 zwischen dem Schenkelarm 12k2 und dem Schenkel 10k mit einem Füllkörper wie einem Stift 16 (oder einer Schraube) ausgefüllt. Die Verzahnung und Verbindung der Winkel 10,12 ist unter der Bezeichnung "Voith-Hirth-Verzahnung" als solche bekannt, jedoch für andere Anwendungszwecke.

Sie dient dazu, den Winkel 12 zu montieren, gleichzeitig aber auch während des Montagevorgangs eine Verstellbarkeit des Winkels 12 entlang der Profilierungen (also senkrecht zur Zeichenebene) zu ermöglichen, um eine exakte Positionierung sicherzustellen und Toleranzen etc. ausgleichen zu können. Die Voith-Hirth-Verzahnung ermöglicht es, die Winkel 10,12 exakt auszurichten. Über die Position, in der die beiden Profilierungen 10p, 12p formschlüssig ineinander greifen lässt sich zusätzlich der Abstand des Winkels 12 zur Dachschalung D einstellen. Der Schenkelarm 121 liegt auf einem Dachziegel Z auf, der auf einer Lattung L montiert ist.

Damit ergibt sich auch eine definierte und vorbestimmbare Position für ein in der Seitenansicht nach den Figuren 1,2 rinnenartiges Profil 20 am anderen Ende des Winkels 12. Das rinnenartige Profil steht in der Darstellung gemäß Figur 2 nach oben ab, also entgegengesetzt zu den kurzen Schenkelarmen 12k1, 12k2.

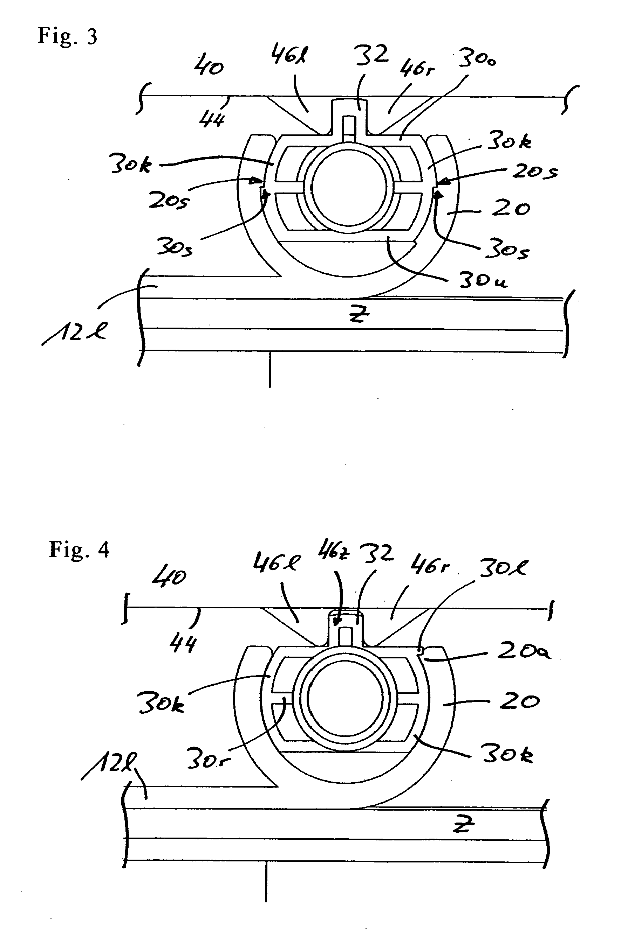

Wie Figur 2 zeigt beschreibt das rinnenartige Profil 20 einen nach oben offenen Kreisringabschnitt von ca. 190°. Der Umschlingungswinkel sollte >180° sein, um eine Schiene 30 form- und kraftschlüssig aufnehmen zu können. Die Schiene 30 ist hier ein stranggepresster Profilhohlkörper und wie folgt gestaltet (Figuren 3,4): Zwei parallel zueinander im Abstand verlaufende Seitenflächen 30o und 30u werden außenseitig von zwei entgegengesetzt gekrümmten Kreisringabschnitten 30k verbunden, deren Krümmung der Krümmung des Profils 20 entspricht. In einer Position etwa 90° versetzt zu der dargestellten Einbauposition wird die Schiene 30 in das Profil 20 eingelegt und dann im Uhrzeigersinn soweit gedreht, bis eine an der Seitenfläche 30o vorstehende, als Lippe gestaltete Anschlagfläche 301 gegen eine korrespondierende stufenförmige Anschlagfläche 20a des Profils 20 anschlägt (Figur 4).

Eine alternative Ausführungsform zeigt Figur 3. Jede Außenfläche jedes Kreisringabschnitts 30k hat eine treppenartige Stufe 30s. Jede Stufe 30s schlägt in der Montageposition (Figur 3) gegen eine korrespondierende Stufe 20s auf der Innenfläche des Profils 20 an. Dabei liegen die Anschlagmittel auf einer 09.00h und einer 03.00h Stellung.

Zur Montage der Schiene 30 wird diese in mindestens zwei Profile 20 von mindestens zwei Klammern eingelegt, die im Abstand zueinander auf dem Dach angeordnet sind. Diese Position definiert die Montageposition der Schiene in den Profilen 20, wobei die Kreisringabschnitte 30k jeweils flächig gegen korrespondierende Innenflächen des Profils 20 anliegen. Wie Figur 3 zeigt bilden die obere Seitenfläche 20o jedes Profils 20 und die obere Seitenfläche 30o der Schiene 30 eine Ebene.

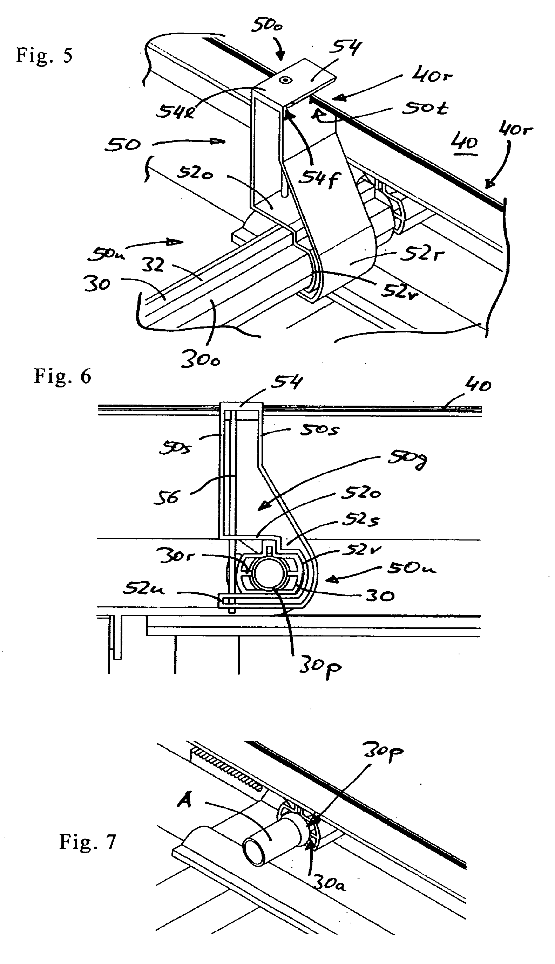

Auf der Schiene 30 können weiters Befestigungsbügel für einen Kollektor platziert werden. Die Festlegung der Bügel auf der Schiene kann beispielsweise analog zur Befestigung des Klammerteils 12 an der Schiene 30 erfolgen. Der Aufbau und die Funktion der Bügel wird anhand von weiteren Ausführungsformen in den Figuren 5 bis 10 näher beschrieben.

Beim dargestellten Ausführungsbeispiel erstreckt sich von der Seitenfläche 30o eine Leiste 32 nach oben, die eine Montageleiste für einen zugehörigen Kollektor 40 bildet. Die Leiste 32 hat einen rechteckigen Querschnitt.

In den Figuren 2 bis 4 ist der Kollektor 40 mit einem Teil seines quaderförmigen flachen Gehäuses 40g zu erkennen. Entlang seines Bodens 44 verlaufen zwei Stützleisten 461, 46r jeweils parallel zu der Leiste 32 und in einem Abstand zueinander, der der Breite der Leiste 32 entspricht oder etwas größer ist. Die Leisten 461, 46r verlaufen parallel zu Schmalseiten (nicht dargestellt) und über die gesamte Breite des Kollektors 40. Während die gegenüberliegenden Innenflächen der Stützleisten 461, 46r senkrecht vom Wannenboden 44 abstehen verlaufen die jeweiligen Außenflächen entgegengesetzt geneigt, so dass sich für jede Stützleiste 461, 46r in der Seitenansicht ein dreieckiger Querschnitt und für die Anordnung insgesamt ein trapezförmiger Querschnitt ergibt.

Leiste 32 und Stützleisten 461, 46r dienen der Konfektionierung des Kollektors 40 auf einer korrespondierenden Schiene 30, wobei die Schiene, wie sich aus vorstehender Beschreibung ergibt, auf mindestens zwei Profilen 20 befestigt ist, die im Abstand zueinander angeordnet sind.
Dazu wird der Kollektor 40 von links oder rechts auf die Schiene 30 aufgeschoben. Bei Erreichen der Stützleisten 46r (oder 461) wird der Kollektor 40 zunächst entlang der entsprechenden Schrägfläche der Stützleiste 46r (oder 461) etwas von der Schiene 30 abgehoben, bis er unter Gravitationseinfluss nach unten rutscht, wobei die Leiste 32 in den Zwischenraum 46z zwischen den Stützleisten 46r, 461 fällt. Jetzt ist der Kollektor 40 exakt zur Schiene 30 und exakt zum Winkel 12 angeordnet (Montageposition nach Figur 2).

Grundsätzlich würde es genügen, einen Kollektor 40 auf einer Schiene 30 zu montieren. Er würde dann jedoch geneigt zur Dachschalung D verlaufen. Figur 2 zeigt eine parallele Anordnung von Dachschalung D und Kollektor 40, woraus folgt, dass der Kollektor 40 noch auf einer zweiten, nicht dargestellten Schiene aufliegt, die analog zur Schiene 30 gestaltet und montiert ist.

Die Figuren 5 und 6 zeigen einen Bügel 50 zur Befestigung des Kollektors 40 an der Schiene 30. Der Bügel 50 weist einen ersten Abschnitt 50u auf, der die Schiene 30 umgreift und einen zweiten Abschnitt 50o, mit dem ein Rand 40r des Kollektors 40 fixiert wird.

Der erste Abschnitt 50u hat im Schnitt angenähert eine liegende U-Form mit zwei parallelen Schenkeln, wobei der obere Schenkel 52o mit einer Stufe 52s ausgebildet ist, die die Leiste 32 der Schiene 30 bündig umgreift. Der Bügel 50 wird seitlich auf die Schiene 30 aufgeschoben (parallel zur Fläche 30o), bis eine konkav gekrümmte Innenfläche 52v des Verbindungsschenkels 52r gegen die korrespondierend gekrümmte Außenfläche des Kreisringabschnitts 30k der Schiene 30 anliegt. (Figuren 5,6). Der als Spitzgussteil aus Kunststoff gestaltete Bügel steht dann mit seinem mittleren Gehäuseabschnitt 50g senkrecht nach oben von der Schiene 30 ab. Der Gehäuseabschnitt 50g ist auf drei Seiten geschlossen und auf einer Seite (in Figur 6 nach vorne) geöffnet. Die beiden parallelen Seitenwände 50s des Gehäuseabschnitts 50g sind an ihrem freien oberen Ende abgestuft (Stufe 50t) ausgebildet. Über den Stufen 50t ist am zweiten Abschnitt 50o ein Deckel 54 zu erkennen, dessen Längsrichtung parallel zur Schiene 30 liegt und der an seinem Ende 541, das ist das Ende, das am weitesten vom Kollektor 40 entfernt liegt, über ein Filmscharnier 54f mit dem Gehäuseabschnitt 50g verbunden ist.

Der Deckel 54 ist so dimensioniert, dass er über einen Rand 40r des Kollektors 40 gelegt werden kann, wenn der Bügel 50 auf der Schiene 30 in Richtung auf den Kollektor 40 verschoben wird und der Rand 40r des Kollektors 40 auf die Stufen 50t aufläuft. Danach wird eine Schraube 56 senkrecht zur Schiene durch den Deckel 54 geführt und durch den ersten Abschnitt 50u bis in den unteren Schenkel 52u. Dabei wird der Deckel 54 in Richtung auf die Schiene 30 gezogen, bis er auf dem Rand 40r des Kollektors 40 aufliegt. Die Schraube 56 kann danach noch ein Stück weiter angezogen werden, um den Kollektor 40 gegen die Schiene 30 zu verspannen und sicher festzulegen. Gleichzeitig wird die Position des Bügels 50 gegenüber der Schiene 30 fixiert.

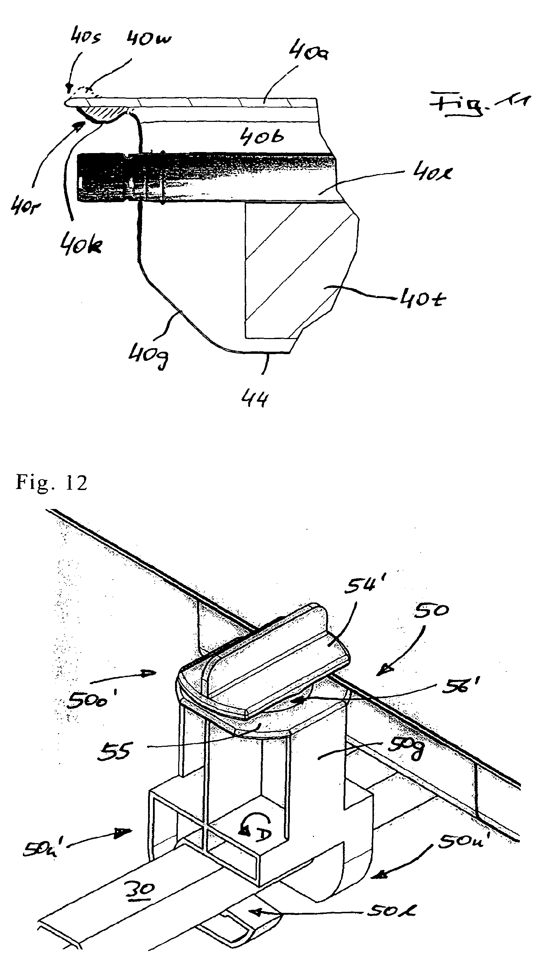

Der Bügel 50 kann auch gemäß Figur 12 gestaltet sein. Der erste Abschnitt 50u' hat wieder eine U-Form, jedoch so, dass der Bügel 50 senkrecht zum Schienenverlauf auf die Schiene 30 aufgesetzt wird. Ein U-Schenkel 501 ist wiederum U-förmig gestaltet, jedoch in einer Richtung senkrecht zur U-Form des Abschnitts 50u'. Daraus ergibt sich eine Art Bajonettverschluss, um den Bügel 50 auf der Schiene 30 zu befestigen. Nach dem beschriebenen Aufstecken des Bügels 50 auf die Schiene 30 wird der Bügel 50 um 90° in die dargestellte Befestigungsposition verschoben (Pfeil D). Auch sein Befestigungsende 50o' ist etwas anders als in Figur 6, 7. Der Deckel 54' ist etwa oval und bildet den Teil einer Schraube 56', die auf einen Bügelkörper 50g aufgeschraubt wird, wobei der Kollektor 40 zwischen Deckel 54' und einem im Abstand dazu angeordneten Rand 55 festgeklemmt wird.

Es ist klar, dass ein Kollektor über mindestens zwei Bügel 50 (auf gegenüberliegenden Längs- oder Breitseiten) oder besser: über vier Bügel (jeweils zwei auf jeder Längs- oder Breitseite) befestigt wird. Aufgrund des Schienensystems lassen sich die Positionen der Bügel 50 individuell einrichten. Die genaue Position benachbarter Kollektoren 40 kann ebenso an der Baustelle vorgenommen werden. Durch die beschriebene Ausführungsform lassen sich benachbarte Kollektoren 40 exakt und dicht positionieren. Hierdurch wird eine höhere Belegungsdichte und eine verbesserte Optik erreicht, was beispielsweise bei einer Fassadenmontage wichtig ist.

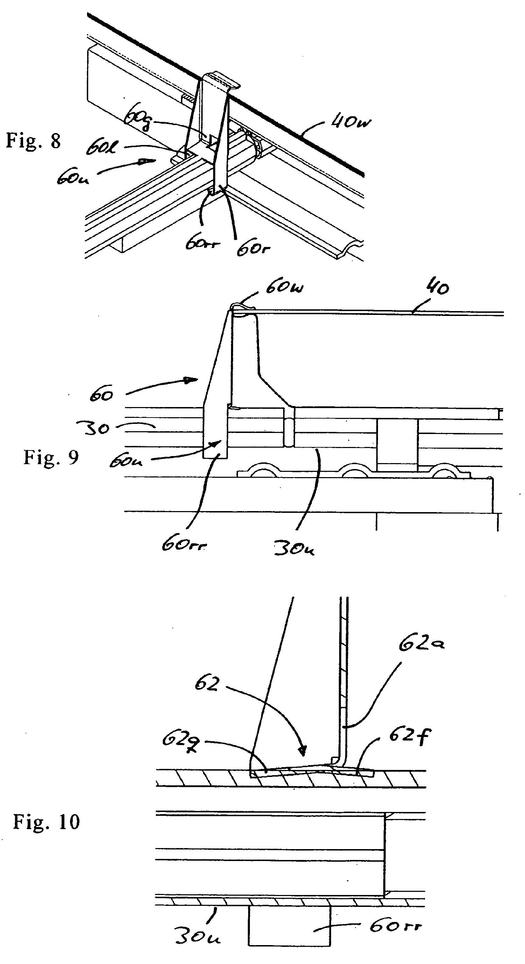

Der dargestellte Kollektor 40 ist dadurch gekennzeichnet, dass er rahmenlos ist. Sein quaderförmiges Gehäuse 40g ist an seiner der Sonne zugewandten Seite mit dem umlaufenden Randstreifen 40r ausgebildet, auf dem eine transparente Abdeckung 40a verklebt ist (Klebstoffbereich K schraffiert in Figur 11 dargestellt), wobei der Randstreifen 40r vor einer konvex gewölbten Kante 40s der Abdeckung 40a endet, also seitlich nicht gegenüber der Abdeckung 40a vorsteht und weitere Einfassungen und/oder Dichtungen nicht vorhanden sind. Wie die Figuren 9 und 11 zeigen kann der Randstreifen 40r eine gegenüber der Abdeckung 40a konvexe Zone 40k aufweisen, die innenseitig den Klebstoff aufnimmt. In Figur 11 ist zusätzlich ein Absorberblech 40b und ein zugehöriges so genanntes Registerrohr 401 zu erkennen, das seitlich aus dem Gehäuse 40g herausgeführt ist. Darunter ist eine thermische Isolierung aus Mineralwolle 40t zu erkennen. Im Randbereich 40r der Abdeckung 40 ist gestrichelt ein umlaufender Wulst 40w zu erkennen (mögliche weitere Ausführungsform für einen Bügel der nachstehend beschriebenen Art).

Einen alternativen Befestigungsbügel 60 zeigen die Figuren 8-10. Das erste Ende 60u des Bügels 60 ist U-förmig (nach unten offen) gestaltet, allerdings in einer Ebene senkrecht zur Längsachse der Schiene 30 (bezogen auf die dargestellte Montageposition). Beide U-Schenkel 60r, 601 sind an ihren freien Ende nach innen umgebogen, wodurch Rastelemente 60rr gebildet werden. Beim Aufsetzen des Bügels 60 auf die Schiene 30 werden die U-Schenkel 60r, 601 zunächst nach außen aufgebogen, bevor sie nach Passieren der Schiene 30 zurückfedern und mit ihren Rastelementen 60rr in Schlitze (nicht dargestellt) eingreifen, die auf der unteren Stirnfläche 30u der Schiene 30 ausgebildet sind. Beim Aufstecken des Bügels 60 wird gleichzeitig eine zweiteilige Feder 62 gespannt, die aus einem Gehäuseabschnitt 60g ausgeformt ist. Der Gehäuseabschnitt 60g stellt den Mittelteil des Befestigungsbügels 60 dar. Die Federarme sind mit 62q und 62f bezeichnet, die zwischen beiden erkennbare Aussparung mit 62a. Die Federarme 62q, 62f liegen in der dargestellten Montageposition unter Vorspannung auf der Schiene 30 auf (Figur 10).

Dennoch kann der Befestigungsbügel entlang der Schiene 30 verschoben werden, indem er gegen den Widerstand der Feder 62 etwas gegen die Schiene 30 gedrückt wird, bis sich die Rastarme 60rr etwas von der Schiene gelöst haben. So kann der Bügel 60 genau auf die gewünschte Kollektorposition angepasst werden. Beim Aufschieben auf den Kollektor 40 wird ein wellenartig gestaltetes Federteil 60w am zweiten Abschnitt 60o über einen wulstartigen Rand 40w des Kollektors 40 geführt. Dabei wird der Kollektor 40 unter Vorspannung gegen die Schiene 30 gezogen und festgehalten. An einem gegenüberliegenden Randabschnitt des Kollektors 40 wird analog ein zweiter Bügel 60 befestigt. Weitere Bügel 60 können analog auf weiteren Schienen 30 montiert werden.

Die Figuren 7 und 9 zeigen, wie zwei Schienen 30 in Axialrichtung miteinander verbunden werden können, nämlich über einen rohrförmigen Adapter A, der in korrespondierende, axial verlaufende rohrartige Aufnahmeöffnungen 30a eines Rohrprofils 30p jeder Schiene 30 unter Formschluss eingeschoben wird. Gemäß Figuren 3 und 4 ist das Rohrprofil 30p über radiale Stege 30r mit der umlaufenden Schienenwand (den Kreisringabschnitten 30k) verbunden.

Mit den beschriebenen Bauteilen lässt sich ein komplettes Aufbau- und Befestigungssystem für solartechnische Kollektoren (beispielsweise Kollektoren zur Warmwasserbereitung oder zur Stromgewinnung) schnell, sicher und fast ohne Werkzeug erstellen. Ein Schraubendreher genügt, um den Winkel 10 auf der Dachschalung D und die Schraube 56 zu befestigen. Alle anderen Teile lassen sich ohne Werkzeug montieren. Alle Bauteile können beispielsweise aus Metall oder Kunststoff bestehen. Mehrere der beschriebenen Befestigungsmittel sind in ihrer Position variabel, das heißt, sie können vor Ort in verschiedenen Richtungen des Koordinatensystems verschoben werden, um Toleranzen vor Ort ausgleichen zu können.

Indem die Schenkel 10k, 12k1 entlang unterschiedlicher Profilrillen miteinander verbunden werden ist eine Mobilität senkrecht zur Dachfläche möglich (z-Richtung). Eine Verschiebung parallel zur den Profilrillen schafft eine Anpassungsmöglichkeit in einer zweiten Richtung (x-Richtung). Die Anordnung des Winkels 101 lässt sich in y-Richtung anpassen.

Die Schiene 30 kann entlang der Profile 20 in Axialrichtung (x-Richtung wie vor) verschoben werden. Dies gilt auch für die Position des Bügels 50 entlang der Schiene 30.

Der Kollektor 40 lässt sich über die Befestigungsmittel der Bügel 50 gegen die Schiene 30 verspannen.

Das System lässt sich beliebig erweitern. Es kann auf Flachdächern und Dächern beliebiger Neigung, aber auch an Fassaden montiert werden.

## Patentansprüche

1. Schiene (30) zur Aufnahme und Befestigung eines solartechnischen Kollektors (40), mit folgenden Merkmalen:
1.1 die Schiene (30) besteht aus einem Profilkörper mit zwei zueinander im Abstand verlaufenden, weitestgehend planparallelen Seitenflächen (30o, 30u) die außenseitig von zwei entgegengesetzt gekrümmten Kreisringabschnitten (30k) verbunden sind,
1.2 mindestens eine der Seitenflächen (30o, 30u) und Kreisringabschnitte (30k) weist außenseitig mindestens eine Anschlagfläche (301, 30s) zur Festlegung der Schiene (30) in einem korrespondierenden Aufnahmeprofil (20) und/oder zur Befestigung eines Bügels auf.

2. Schiene (30) nach Anspruch 1, deren Anschlagfläche (301) im Übergangsbereich von der in einer Montageposition der Schiene (30) oberen Seitenfläche (30o) zu dem anschließenden Kreisringabschnitt (30k) angeordnet ist.

3. Schiene (30) nach Anspruch 1, deren Anschlagfläche (30s) auf einer Außenfläche mindestens eines Kreisringabschnitts (30k) angeordnet ist.

4. Schiene (30) nach Anspruch 1 mit je einer Anschlagfläche (30s) auf jedem Kreisringabschnitt (30k), wobei die Anschlagflächen (30s) so angeordnet sind, dass sie beim Einlegen der Schiene (30) in das Aufnahmeprofil (20) gleichzeitig gegen korrespondierende stufenförmige Anschlagflächen (20s) des Aufnahmeprofils (20) anschlagen.

5. Schiene (30) nach Anspruch 1, von deren in einer Montageposition der Schiene (20) oberen Seitenfläche (30o) eine Leiste (32) nach außen absteht.

6. Schiene (30) nach Anspruch 5, deren Leiste (32) mittig von der oberen Seitenfläche (30o) absteht.

7. Schiene (30) nach Anspruch 5, deren Leiste (32) einen rechteckigen Querschnitt aufweist.

8. Schiene (30) nach Anspruch 1, bei der in einem von den Seitenflächen (30o, 30u) und den Kreisringabschnitten (30k) definierten Raum ein axial angeordnetes Rohrprofil (30p) verläuft.

9. Schiene (30) nach Anspruch 1, hergestellt aus Kunststoff oder Metall im Strangpressverfahren.
